Europäisches Patentamt

(19) European Patent Office

Office européen des brevets

(11) Publication number: **0 278 634 B1**

(12) **EUROPEAN PATENT SPECIFICATION**

(45) Date of publication of patent specification :
**11.12.91 Bulletin 91/50**

(21) Application number: **88300673.6**

(22) Date of filing: **27.01.88**

(51) Int. Cl.⁵: **B65G 45/00, B65G 39/00**

(54) Load-supporting ball units.

(30) Priority: **29.01.87 GB 8702012**

(43) Date of publication of application:
**17.08.88 Bulletin 88/33**

(45) Publication of the grant of the patent:
**11.12.91 Bulletin 91/50**

(84) Designated Contracting States:
**DE FR GB SE**

(56) References cited:
**GB-A- 641 016**
**US-A- 4 520 917**

(73) Proprietor: **ALWAYSE ENGINEERING
LIMITED
Warner Street
Birmingham B12 0JG (GB)**

(72) Inventor: **Mellor, Peter
38 Linton Walk Brookvale Village
Erdington Birmingham B23 7YH (GB)**

(74) Representative: **Sherwood, Clive Harry et al
Shaw Bowker & Folkes Whitehall Chambers 23
Colmore Row
Birmingham B3 2BL (GB)**

Jouve, 18, rue Saint-Denis, 75001 PARIS

## Description

This invention relates to load supporting ball units of the kind exemplified by GB-A-641016 wherein the major ball (which serves to support the load) is rotatably supported upon a nest of recirculating smaller balls incorporated in a housing and is retained in the housing by a retaining ring.

Ball units of the aforesaid kind are commonly used in conveyor lines where the balls permit omnidirectional movement of loads passing thereover for example to permit a change in direction of their conveyance between different rectilinear conveyor tracks. It is however contemplated that ball units according to the invention may alternatively be used in an inverted position with the ball housing mounted on and beneath the load for rolling motion of the ball over a fixed surface.

Ball units of the aforesaid kind are commonly required to operate in dirty conditions wherein the major ball picks up contamination then entering the ball unit with deleterious effect. This invention has for its object to reduce the ingress of such contamination.

According to the invention a ball unit comprising a major ball (which serves to support the load) rotatably supported upon a nest of recirculating smaller balls incorporated in a housing and retained in the housing by a retaining ring is characterised by a scraper ring mounted in the housing to scrape the major ball, and the housing having at least one aperture communicating the space within the housing between the planes of encirclement of the ball by the retaining ring and scraper ring with the exterior of the housing to permit escape of contamination removed from the ball by the scraper ring.

Preferably the scraper ring wipes the ball over a circle of the ball between the parallel planes of encirclement of the ball by the retaining ring and the great circle of the ball.

The housing apertures may open both above and below the scraper ring.

One presently preferred embodiment of the invention is more particularly described with reference to the accompanying drawings wherein :

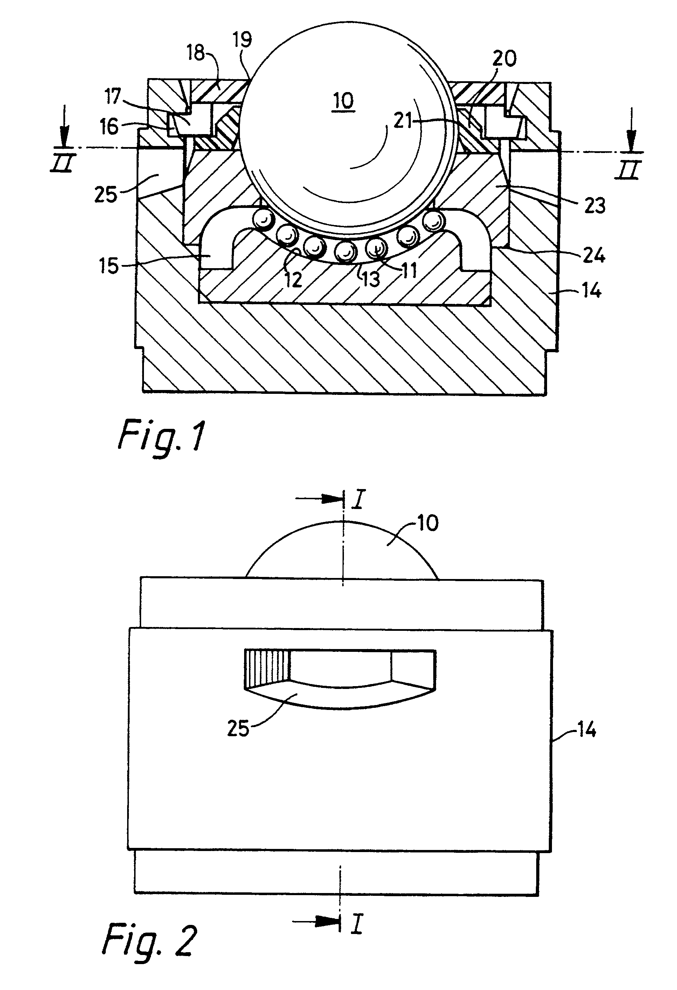

Figure 1 is a sectional elevation of a ball unit according to the invention ;

Figure 2 is a side elevation wherein I-I indicates the section of Figure 1

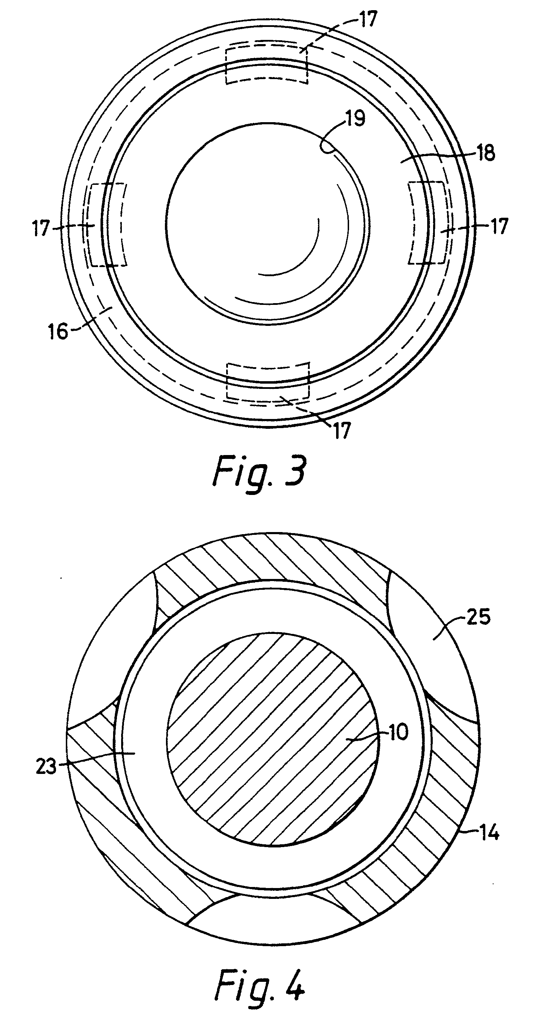

Figure 3 is a plan view ; and

Figure 4 is a cross section on the line II-II of Figure 1.

In the drawings the ball unit comprises a major ball 10 resting upon a nest of recirculation balls 11 in turn supported on the concave top face 12 of a table 13 on the floor of the generally cylindrical housing cup 14. As the major ball 10 rotates under translation of a load the recirculation balls 11 are caused to proceed in the direction of rotation of the underside of the major ball so as to spill over the rim of the nest into the circular channel 15 wherein they are pushed along by following balls so as to return into the nest ready for further recirculation. A circumferential groove 16 in the internal cylindrical wall of the housing gives snap engagement for the four radially outwardly projecting feet 17 of a retaining ring 18 and the circular mouth 19 of this retaining ring is appropriately dimensioned to have close contact with a small circle of the major ball 10 so as both to retain that ball in the housing in close proximity to the recirculation balls 11 and also to serve as a first line of resistance to entrance of contamination on the surface of the major ball into the interior of the housing.

Disposed within the housing 14 immediately below the retaining ring 18 is a scraper ring 20 of flexible composition having a part spherical mouth section 21 in scraping contact with at least a circle of the surface of the major ball in a plane between the parallel planes of encirclement of the ball by the retaining ring 18 and the great circle of the ball. A second and relatively rigid ring 23, herein called the supporting ring, is located on a shoulder 24 on the cylindrical inside wall of the housing 14 and serves to support the scraper ring 20. Both rings 20 and 23 are held in position with the lower ring 23 on the shoulder 24 by the feet 17 of the retaining ring bearing on the upper face of the scraper ring 20. In this position the underside of the supporting ring 23 retains the recirculation balls 11 within the housing 14.

Apertures or ports 25 provided in the cylindrical wall of the housing 14 give communication between the space between the retaining and scraper rings 18 and 20 and the exterior of the housing. By thin means contamination which succeeds in passing on the major ball past the retaining ring 18 and into the housing is scraped from the ball prior to reaching the recirculation balls 11 and can pass over the top of the scraper element 20 between the feet 17 of the retaining ring 18 and thence escape through the apertures in the housing to the exterior of the latter to be there shed and so substantially reduce the build up of contamination within the housing. In this way both the effectiveness and life of the ball unit according to the invention is substantially improved.

Usually the major ball 10, recirculation balls 11, housing 14, table 13 and supporting ring 23 will be composed of metal and the retaining ring and scraper ring 20 will be moulded from a low friction synthetic plastic, but obviously these materials may be varied according to the needs of their application.

Instead of as illustrated the apertures in the housing wall may be of T-shape with vertical slots extending through the wall of the housing below the register of the horizontal part of the slots with the top face of the scraper ring so as to give communication between the recirculation ball containing cavity part of the housing and the exterior of the housing and thereby allow further opportunity for escape of contamination that passes the scraper ring and/or possibility for flush cleaning the recirculation ball containing cavity whilst preventing egress of recirculating balls.

## Claims

1. A load supporting ball unit comprising a major ball (10) rotatably supported upon a nest of recirculating smaller balls (11) incorporated in a housing (14) and retained in the housing by a retaining ring (18) is characterised by a scraper ring (20) mounted in the housing (14) to scrape the major ball (10) and the housing having at least one aperture (25) communicating the space within the housing between the planes of encirclement of the ball by the retaining ring and scraper ring with the exterior of the housing to permit escape of contamination removed from the ball by the scraper ring.

2. A ball unit according to Claim 1 wherein the scraper ring wipes the ball over a circle of the ball between the parallel planes of encirclement of the ball by the retaining ring and the great circle of the ball.

3. A ball unit according to Claim 1 or 2 wherein the scraper ring is held upon a supporting ring (23) within the housing.

4. A ball unit according to any one of the preceding claims wherein the retaining ring engages with the scraper ring to position the latter in the housing.

5. A ball unit according to Claim 4 wherein feet (17) on the retaining ring have snap engagement with an internal wall (16) of the housing and a plurality of apertures through said wall communicate the space above the scraper ring between said feet and the exterior of the housing.

6. A ball unit according to any one of the preceding claims wherein the the aperture also communicates space within the housing below the scraper ring and containing the recirculating balls (11) with the exterior of the housing.

## Patentansprüche

1. Lasttrage-Kugeleinheit, enthaltend eine Hauptkugel (10), die drehbeweglich auf einem in einem Gehäuse (14) untergebrachten Nest von sich drehenden kleinen Kugeln (11) gelagert ist und in dem Gehäuse durch einen Abschlußring (18) gehalten wird, gekennzeichnet durch einen Abstreifring (20), der zum Abstreifen der Hauptkugel (10) im Gehäuse (14) angeordnet ist, und wobei das Gehäuse wenigstens eine Öffnung (25) aufweist, die den Raum im Gehäuse zwischen den durch den Abschlußring und den Abstreifring gebildeten, die Kugel umschließenden Flächen mit dem Gehäuseäußeren verbindet, um einen Austritt von Verschmutzung zu erlauben, die durch den Abstreifring von der Kugel entfernt wurde.

2. Kugeleinheit nach Anspruch 1, wobei der Abstreifring die Kugel längs eines Kugelkreises von der Kugel abstreift, der zwischen den parallel zueinander stehenden, die Kugel umfassenden Ebenen abstreift, die durch den Abschlußring und durch den Großkreis der Kugel gebildet werden.

3. Kugeleinheit nach Anspruch 1 oder 2, wobei der Abstreifring auf einen Halterungsring (23) innerhalb des Gehäuses gehaltert wird.

4. Kugeleinheit nach wenigstens einem der vorhergehenden Ansprüche, wobei der Abschlußring mit dem Abstreifring in Eingriff kommt, um diesen im Gehäuse zu positionieren.

5. Kugeleinheit nach Anspruch 4, wobei Füße (17) am Abschlußring in Schnappeingriff mit einer inneren Wand (16) des Gehäuses stehen und eine Mehrzahl von Öffnungen durch diese Wand den Raum oberhalb des Abstreifringes zwischen den Füßen mit dem Gehäuseäußeren verbinden.

6. Kugeleinheit nach wenigstens einem der vorhergehenden Ansprüche, wobei die Öffnung weiterhin den unterhalb des Abstreifrings angeordneten und die sich drehenden Kugeln (11) enthaltenen Raum mit dem Gehäuseäußeren verbindet.

## Revendications

1. Unité de billes destinée à supporter des charges, comprenant une plus grande bille (10) supportée de façon à pouvoir tourner sur un lit de billes plus petites (11) de recirculation, associée à un logement (14) et retenue dans celui-ci au moyen d'un anneau de retenue (18), caractérisée par un anneau de raclage (20) monté dans le logement (14) de façon à racler la plus grande bille (10), et par le fait que le logement présente au moins une ouverture (25) faisant communiquer, avec l'extérieur du logement, l'espace contenu dans le logement et compris entre les plans d'encerclement de la bille par l'anneau de retenue et par l'anneau de raclage, afin de permettre l'évacuation des impuretés retirées de la bille par l'anneau de raclage.

2. Unité de billes selon la revendication 1, dans laquelle l'anneau de raclage balaie la bille selon un cercle de celle-ci situé entre les plans parallèles d'encerclement de la bille par l'anneau de retenue et par le grand cercle de la bille.

3. Unité de billes selon la revendication 1 ou 2, dans laquelle l'anneau de raclage est maintenu sur un anneau de support (23) à l'intérieur du logement.

4. Unité de billes selon l'une quelconque des revendications précédentes, dans laquelle l'anneau de retenue engage l'anneau de raclage pour positionner ce dernier à l'intérieur du logement.

5. Unité de billes selon la revendication 4, dans lequel des pieds (17) de l'anneau de retenue sont en engagement par pression avec une paroi intérieure (16) du logement, et une série d'ouvertures ménagées dans ladite paroi communiquant avec l'espace situé au-dessus de l'anneau de raclage entre lesdits pieds et l'extérieur du logement.

6. Unité de billes selon l'une quelconque des revendications précédentes, dans laquelle l'ouverture fait aussi communiquer avec l'extérieur du logement, l'espace situé à l'intérieur du logement au-dessous de l'anneau de raclage et qui contient les billes de recirculation (11).

**Fig.1**

**Fig. 2**

*Fig. 3*

*Fig. 4*